# EUROPEAN PATENT APPLICATION

(11) **EP 4 793 797 A1**
(43) Date of publication of application: **19.08.2026**
(21) Application number: 25772676.0
(22) Date of filing: 02.01.2025
(51) Int. Cl.: G06F 18/24

(54) **TRAINING METHOD AND APPARATUS, VEHICLE SAFETY FUNCTION CONTROL METHOD AND APPARATUS, AND VEHICLE**

(30) Priority: 20.03.2024 CN 202410323642
(71) Applicant: JIANGSU XCMG STATE KEY LABORATORY TECHNOLOGY CO., LTD., Xuzhou Jiangsu 221004 (CN)
(72) Inventor: YANG, Xiang, Xuzhou, Jiangsu 221004 (CN); LIU, Jian, Xuzhou, Jiangsu 221004 (CN); XIA, Guanghao, Xuzhou, Jiangsu 221004 (CN)
(74) Representative: Ruttensperger Lachnit Trossin Gomoll
(86) International application number: PCT/CN2025/070009
(87) International publication number: WO 2025/194965

(57) **Abstract**

The present disclosure relates to the field of control, and provides a training method and apparatus, a vehicle safety function control method and apparatus, and a vehicle. The training method comprises : acquiring a signal sample image of a vehicle, wherein the signal sample image comprises a safety function normal image and a safety function failure image; using the signal sample image to train a deep neural network model, and using the trained deep neural network model to perform data augmentation processing on the signal sample image to obtain training sample images; and using the training sample images to train a safety function failure identification classifier, wherein the safety function failure identification classifier is used for identifying a safety function state during vehicle operation, and the safety function state includes a safety function normal state or a safety function failure state.

## Description

### CROSS REFERENCE TO RELATED APPLICATIONS

The present disclosure is based on and claims priority of Chinese application for invention No. 202410323642.9, filed on March 20, 2024, the disclosure of which is hereby incorporated into this disclosure by reference in its entirety.

### TECHNICAL FIELD

This disclosure relates to the field of control, particularly to a training method, a vehicle safety function control method, an apparatus, and a vehicle.

### BACKGROUND

In recent years, with the emergence and continuous advancement of high-tech fields such as electronic technology, computer technology, and sensor technology, the technical level of construction machinery has steadily improved. As a result, the construction machinery industry has provided solid support for the steady progress of infrastructure construction. With the development of intelligence in the construction machinery industry, electronic or electrical and programmable devices are now widely used, particularly for achieving functional safety. Failure of electronic and electrical systems can result in the malfunction of control functions, resulting in accidents and even personal injury. The European Union has previously incorporated the ISO 13849 standard for functional safety of construction machinery into CE certification, and the ISO 19014 standard was officially adopted as an EU EN standard in 2023. As a Type C standard, it provides detailed regulations and systematic evaluations for the functional safety of earth-moving machinery. As awareness of functional safety grows, the construction machinery industry is facing increasingly stringent technical requirements. This has prompted experts and scholars to conduct more research into functional safety technologies for construction machinery products.

### SUMMARY

According to one aspect of the present disclosure, there is provided a training method for training a safety function failure recognition classifier, including: obtaining signal sample images of a vehicle, where the signal sample images include images with normal safety function and images with failed safety function; training a deep neural network model using the signal sample images, and performing data augmentation on the signal sample images using the trained deep neural network model to obtain training sample images; and training a safety function failure recognition classifier using the training sample images, where the safety function failure recognition classifier is configured to identify a safety function state of the vehicle during operation, the safety function state including a safety function normal state or a safety function failure state.

In some embodiments, the vehicle is a loader, and the images with failed safety function include images with speed safety function failure and images with deceleration-stop safety function failure, where the safety function state includes the safety function normal state, a speed safety function failure state, and a deceleration-stop safety function failure state.

In some embodiments, obtaining the signal sample images of the vehicle includes: obtaining data sample signals of the vehicle during normal operation, speed safety function failures, and deceleration-stop safety function failures respectively, where the data sample signals include accelerator pedal sample signals, brake pedal sample signals, and torque feedback sample signals; and fusing the data sample signals into the signal sample images.

In some embodiments, obtaining the signal sample images of the vehicle further includes: obtaining generation time of the data sample signals, where converting the data sample signals into the signal sample images includes: generating the signal sample images based on the data sample signals and the generation time.

In some embodiments, the deep neural network model includes a generative adversarial network model, and training the deep neural network model using the signal sample images includes: generating fake sample images by inputting random noise into a generator of the generative adversarial network model; obtaining the sample authenticity by inputting the signal sample images and the fake sample images into a discriminator of the generative adversarial network model; and training the discriminator using a first loss function and training the generator using a second loss function, where the first loss function outputs a value that is negatively correlated with accuracy of the sample authenticity, and the second loss function outputs a value that is positively correlated with accuracy of the sample authenticity.

According to another aspect of this disclosure, there is further provided a vehicle safety function control method, including: obtaining operation data of a vehicle; fusing the vehicle operation data into a data image; obtaining a safety function state of the vehicle by inputting the data image into a safety function failure recognition classifier, where the safety function state includes a safety function normal state or a safety function failure state, and the safety function failure recognition classifier is obtained based on the above training method; and controlling a safety function of the vehicle based on the safety function state of the vehicle.

In some embodiments, the vehicle includes a loader, where the vehicle operation data includes an accelerator pedal signal, a brake pedal signal, and a torque feedback signal; and the safety function failure state includes a speed safety function failure state or a deceleration-stop safety function failure state.

In some embodiments, controlling the safety function of the vehicle based on the safety function state of the vehicle includes: controlling the vehicle to enter a safety state in response to the vehicle being in a speed safety function failure state, and determining whether the vehicle is in a driving state; performing speed control on the vehicle according to a predetermined accelerator pedal instruction in response to the vehicle being in the driving state; and controlling the vehicle to halt in response to the vehicle being in a start state.

In some embodiments, controlling the safety function of the vehicle based on the safety function state includes: controlling the vehicle to enter a safe state in response to the vehicle being in a deceleration-stop safety function failure state, and determining whether the vehicle is in a driving state; performing speed control on the vehicle according to a predetermined brake pedal instruction in response to the vehicle being in the driving state; and controlling the vehicle to halt in response to the vehicle being in a start state.

In some embodiments, controlling the safety function of the vehicle based on the safety function state includes: controlling driving state of the vehicle to remain unchanged in response to the vehicle being in a safety function normal state.

In some embodiments, the method further includes: obtaining a gearshift switch signal and a directional feedback signal of the vehicle; identifying whether the vehicle is in a direction-change safety function failure state based on the gearshift switch signal and the directional feedback signal; controlling the vehicle to enter a safe state in response to the vehicle being in a direction-change safety function failure state and determining whether the vehicle is in a driving state; performing directional control on the vehicle according to a predetermined instruction in response to the vehicle being in the driving state; and controlling the vehicle to halt in response to the vehicle being in a start state.

In some embodiments, the method further includes: obtaining a brake switch signal of the vehicle; identifying whether the vehicle is in a brake safety function failure state based on the brake switch signal and a torque feedback signal; controlling the vehicle to enter a safe state in response to the vehicle being in the brake safety function failure state and determining whether vehicle braking is activated; controlling output torque of the vehicle to be zero in response to the vehicle braking being activated; and controlling the output torque of the vehicle to remain unchanged in response to vehicle braking not being activated.

In some embodiments, the method further includes: obtaining an emergency stop switch signal of the vehicle; identifying whether the vehicle is in an emergency stop switch safety function state based on the emergency stop switch signal; and controlling the vehicle to enter a safe state and controlling the vehicle to halt in response to the vehicle being in the emergency stop switch safety function state.

According to another aspect of the present disclosure, there is further provided a training apparatus for training a safety function failure recognition classifier, including: a first data obtaining module configured to obtain signal sample images of a vehicle, where the signal sample images include images with normal safety function and images with failed safety function; a first training module configured to train a deep neural network model using the signal sample images, and perform data augmentation on the signal sample images using the trained deep neural network model to obtain training sample images; and a second training module configured to train a safety function failure recognition classifier using the training sample images, where the safety function failure recognition classifier is configured to identify a safety function state of the vehicle during operation, the safety function state including a safety function normal state or a safety function failure state.

According to another aspect of the present disclosure, there is provided a vehicle safety function control apparatus, including: a second data obtaining module configured to obtain operation data of a vehicle and fuse the operation data into a signal image; a state determination module configured to obtain a safety function state of the vehicle by inputting the data image into a safety function failure recognition classifier, where the safety function state includes a safety function normal state or a safety function failure state, and the safety function failure recognition classifier is obtained based on the training method described above; and a control module configured to control safety functions of the vehicle based on the safety function state of the vehicle.

According to another aspect of the present disclosure, there is provided an electronic device, including: a memory; and a processor coupled to the memory, the processor configured to perform the training method or the vehicle safety function control method described above based on instructions stored in the memory.

According to another aspect of the present disclosure, there is further provided a vehicle, including: at least one of the apparatus for training a safety function failure recognition classifier, the vehicle safety function control apparatus, and the electronic device described above.

According to another aspect of the present disclosure, there is further provided a computer-readable storage medium stored thereon computer program instructions that, when executed by a processor, implement the training method or the vehicle safety function control method as described above.

According to another aspect of the present disclosure, there is further provided a computer program product including a computer program or instructions that, when executed by a processor, implement the training method or the vehicle safety function control method described above.

Other features and advantages of the present invention will become apparent from the following detailed description of exemplary embodiments of the present disclosure with reference to the accompanying drawings.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 is a flowchart of a training method for training a safety function failure recognition classifier according to some embodiments of the present disclosure;
FIG. 2 is a schematic diagram showing the implementation principle of a generative adversarial network model according to some embodiments of the present disclosure;
FIG. 3 is a flowchart of a training method for training a safety function failure recognition classifier according to other embodiments of the present disclosure;
FIG. 4 is a flowchart of a vehicle safety function control method according to some embodiments of the present disclosure;
FIG. 5 is a flowchart of a vehicle safety function control method according to other embodiments of the present disclosure;
FIG. 6 is a flowchart of a vehicle safety function control method according to still other embodiments of the present disclosure;
FIG. 7 is a flowchart of a vehicle safety function control method according to still other embodiments of the present disclosure;
FIG. 8 is a flowchart of a vehicle safety function control method according to still other embodiments of the present disclosure;
FIG. 9 is a flowchart of a vehicle safety function control method according to still other embodiments of the present disclosure;
FIG. 10 is a schematic structure diagram of a training apparatus for training a safety function failure recognition classifier according to some embodiments of the present disclosure;
FIG. 11 is a schematic structure diagram of a vehicle safety function control apparatus according to some embodiments of the present disclosure;
FIG. 12 is a schematic structure diagram of an electronic device according to some embodiments of the present disclosure; and
FIG. 13 is a schematic structure diagram of a vehicle according to some embodiments of the present disclosure.

### DETAILED DESCRIPTION OF THE EMBODIMENTS

Various exemplary embodiments of the present disclosure will now be described in detail with reference to the accompanying drawings. Notice that, unless otherwise specified, the relative arrangement, numerical expressions and values of the components and steps set forth in these examples do not limit the scope of the invention.

At the same time, it should be understood that, for ease of description, the dimensions of the various parts shown in the drawings are not drawn to actual proportions.

The following description of at least one exemplary embodiment is in fact merely illustrative and is in no way intended as a limitation to the invention, its application or use.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

For a clear understanding of the object of the present disclosure, its technical solution and advantages, the present disclosure will be further described in detail below in conjunction with the accompanying drawings and embodiments.

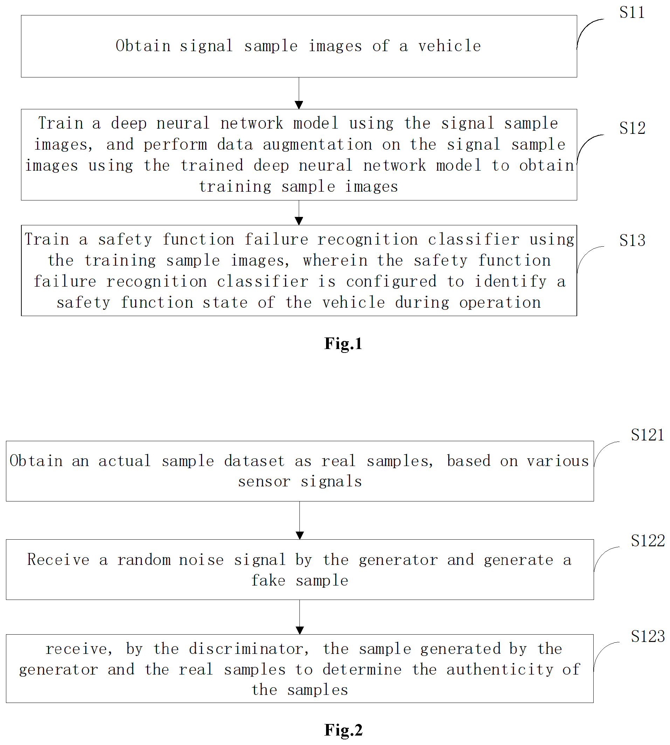

FIG. 1 is a flowchart of a training method for training a safety function failure recognition classifier according to some embodiments of the present disclosure. This embodiment includes steps S11-S13.

In step S11, signal sample images of a vehicle are obtained, where the signal sample images include images with normal safety function and images with failed safety function.

In some embodiments, the vehicle is a loader, and the loader is a type of earthwork engineering machinery in engineering machinery, particularly, a type of self-propelled earthwork handling machinery which is widely used in construction projects such as highways, railways, buildings, hydropower stations, ports and mines.

In some embodiments, the signal sample images of the loader include: images with normal speed and deceleration-stop safety function, images with speed safety function failure, and images with deceleration-stop safety function failure.

In some embodiments, data sample signals are obtained for the loader during normal operation, speed safety function failures, and deceleration-stop safety function failures, respectively. The data sample signals include accelerator pedal sample signals, brake pedal sample signals, and torque feedback sample signals. The data sample signals are fused into the signal sample images.

For example, a plurality of sensors are mounted on a loader. At the same point of time, the opening of the accelerator pedal is collected via a accelerator pedal sensor, the opening of the brake pedal is collected via a brake pedal sensor, and the output torque of the motor is collected via a torque feedback sensor. The accelerator pedal sample signal, the brake pedal sample signal, and the torque feedback sample signal obtained at the same time are fused into an image to obtain the signal sample image.

In some embodiments, data sample signals, as well as the time at which the data sample signals are generated, are obtained for loaders during normal operation, speed safety function failures, and deceleration-stop safety function failures; signal sample images are generated based on the data sample signals and the generation time.

For example, according to the time of signal acquisition, the accelerator pedal sample signal, brake pedal sample signal, and torque feedback sample signal are fused into an image to obtain the signal sample image.

In some embodiments, the signal sample images may be time-domain images or time-frequency images, and the time-frequency images can provide more features for deep convolutional neural networks for feature extraction and classification.

In this step, the numerical signals are converted into images to facilitate subsequent model training.

In some embodiments, upon performing feature extraction on the signal sample images, image classification is performed. For example, the signal sample images are divided into images with normal loader speed and deceleration-stop safety function, images with loader speed safety function failure, and images with loader deceleration-stop safety function failure. This step can be preformed by a classifier or by manual annotation in advance.

Those skilled in the art should understand that, in a case where the number of safety functions of the loader changes, or in a case where this method is applied to other engineering machinery or earth-moving equipment, the types of sensor signals will also change, and thus the types of sample images after classification, will also change accordingly.

In step S12, a deep neural network model is trained using the signal sample images, and the trained deep neural network model is configured to perform data augmentation on the signal sample images to obtain training sample images.

In some embodiments, the deep neural network model includes a generative adversarial network (GAN) model. Training a deep neural network model using the signal sample images includes: generating fake sample images by inputting random noise into a generator of the GAN model; obtaining the sample authenticity by inputting the signal sample images and the fake sample images into a discriminator of the GAN model; and training the discriminator using a first loss function and training the generator using a second loss function, where the first loss function outputs a value that is negatively correlated with accuracy of the sample authenticity, and the second loss function outputs a value that is positively correlated with accuracy of the sample authenticity.

For example, step S12 will be explained with reference to FIG. 2. FIG. 2 is a schematic diagram illustrating the implementation principle of the GAN model according to some embodiments of the present disclosure.

In step S121, an actual sample dataset is obtained, as real samples, based on various sensor signals.

In step S122, the generator receives a random noise signal and generates a fake sample. The random noise signal may be either uniformly or Gaussian distributed.

In step S123, the discriminator receives the sample generated by the generator and the real samples to determine the authenticity of the samples.

The highest probability score is assigned to the real samples. The lowest possible probability score is assigned to the fake sample. The higher the probability score, the more likely the sample is real. The generator progressively enhances its capability to generate samples that asymptotically approach real samples. In other words, the discriminator becomes increasingly unable to distinguish between real and generated samples. The above process is iteratively performed until the discriminator cannot distinguish whether the received samples are real samples or generated samples.

Those skilled in the art should understand that the GAN model used here is merely an example. Other types of deep neural network models with the same or similar functions, such as the DCGAN (Deep Convolutional Generative Adversarial Network) model, can also be configured to process sample data for data augmentation.

In step S13, a safety function failure recognition classifier is trained using the training sample images, where the safety function failure recognition classifier is configured to identify a safety function state of the vehicle during operation, the safety function state including a safety function normal state or a safety function failure state.

In some embodiments, the safety function state of the loader includes a normal state of speed and deceleration-stop safety functions, a speed safety function failure state, or a deceleration-stop safety function failure state.

In some embodiments, a deep convolutional neural network is configured to construct a safety function failure recognition classifier, which is then trained using a large number of generated training sample images. Comparing the output results of the safety function failure recognition classifier with the labeled information of the training sample images, it is determined whether the comparison results meet the requirements of a loss function configured to construct the safety function failure recognition classifier. The above process is repeated to optimize and adjust the parameters of the safety function failure recognition classifier, so that the comparison results ultimately meet the loss function's requirements. Then, the safety function failure recognition classifier is saved.

By inputting data images collected during the operation of the vehicle into the safety function failure recognition classifier, the safety function state of the vehicle can be obtained, and the safety functions of the vehicle can be controlled based on the safety function state of the vehicle.

In the above embodiment, a deep neural network model is constructed and trained to perform data augmentation on the signal sample images using the deep neural network model, resulting in a large number of training sample images. These images are then configured to train the safety function failure recognition classifier to enable the safety function failure recognition classifier to identify the safety function state of the vehicle, thereby improving the speed and accuracy of recognition.

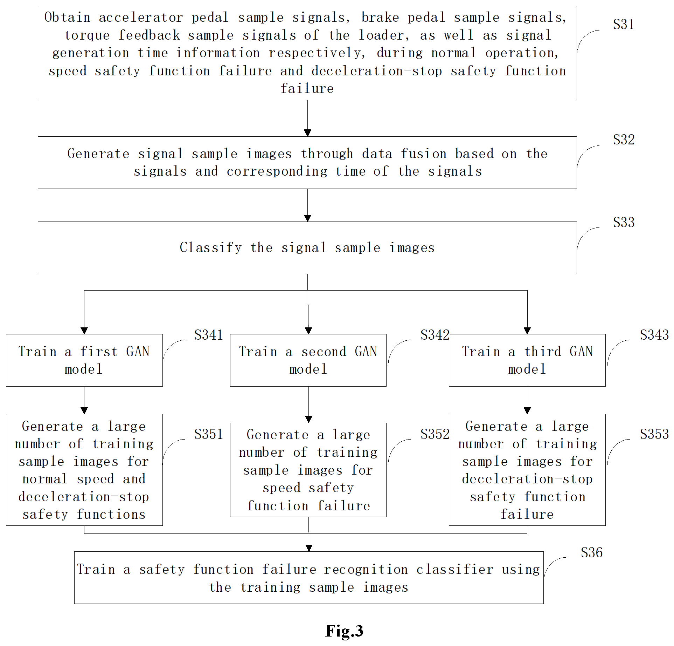

As shown in FIG. 3, a training method for training the safety function failure recognition classifier of this disclosure will be introduced with a loader as an example.

In step S31, accelerator pedal sample signals, brake pedal sample signals, torque feedback sample signals of the loader, as well as signal generation time information, are respectively obtained, during normal operation, speed safety function failure and deceleration-stop safety function failure.

In step S32, signal sample images are generated through data fusion based on the signals and corresponding time of the signals.

In step S33, the signal sample images are classified to obtain images of the loader with normal speed and deceleration-stop safety functions, images of the loader with speed safety function failure, and images of the loader with deceleration-stop safety function failure.

In step S341, a first GAN model is trained using the images of the loader with normal speed and deceleration-stop safety functions.

In step S351, a large number of training sample images are generated for normal speed and deceleration-stop safety functions using the first GAN model.

In step S342, a second GAN model is trained using the images of the loader with speed safety function failure.

In step S352, a large number of training sample images are generated for speed safety function failure using the second GAN model.

In step S343, a third GAN model is trained using images of the loader with deceleration-stop safety function failure.

In step S353, a large number of training sample images are generated for deceleration-stop safety function failure using the third GAN model.

Those skilled in the art should understand that three GAN models are trained separately to generate training sample images for three different types of images. It is also possible to train only one GAN model to generate training sample images of different types.

In some embodiments, the training process for generating a GAN model is as follows.

For each type of sample image data, the input parameters include: the distribution P (x) of a time-frequency dataset generated by fusing real sensor signals, the number of adversarial training iterations T, the number of training iterations K for the discriminator network within each adversarial training cycle, the number of mini-batch samples M, the generator network G (z, v), the discriminator network D (x, r), and the noise distribution N (z). The output parameters include: the generator network parameter v and the discriminator network parameter r.

Randomly initialize the parameters v, r;
For t ← 1 to T do
//Train discriminator network D (x, r)
For k ← 1 to K do
Collect M samples **{*x^{m}*}** from the fused time-frequency image dataset P (x), where **1** ≤ ***m*** ≤ ***M*;**
Collect M samples **{*z^{m}*}** from the noise distribution N (z), where **1** ≤ ***m*** ≤ ***M*;**
Update the parameter r via random gradient ascent with a gradient of:
   $\frac{\partial }{\partial r} \left[\frac{1}{M}{\sum }_{m = 1}^{M} \left(log D\left({x}^{\left(m\right)}, r\right)+log\left(1-D\left(G\left({z}^{\left(m\right)}, v\right),r\right)\right)\right)\right] ;$
End
//Train the generator network G (z, v)
Collect M samples **{*z^{m}*}** from the noise distribution N (z), where **1** ≤ ***m*** ≤ ***M*;**
Update the parameter v via random gradient ascent with a gradient of:
   $\frac{\partial }{\partial v} \left[\frac{1}{M}{\sum }_{m = 1}^{M} log D \left(G\left({z}^{\left(m\right)}, v\right),r\right)\right] ;$
End

In step S36, a safety function failure recognition classifier is trained using the training sample images. This safety function failure recognition classifier is configured for image feature extraction and classification. The image features extracted include one or more of geometric features, shape features, amplitude features, and histogram features.

In some embodiments, the safety function failure recognition classifier is constructed using a deep convolutional neural network, such as GoogLeNet, AlexNet or ResNet.

In the aforementioned embodiment, the training of two models facilitates the subsequent judgment of the safety function state of the loader during operation, thereby effectively reducing the probability of safety function failure of the loader and thus enhancing the safety of loader operation.

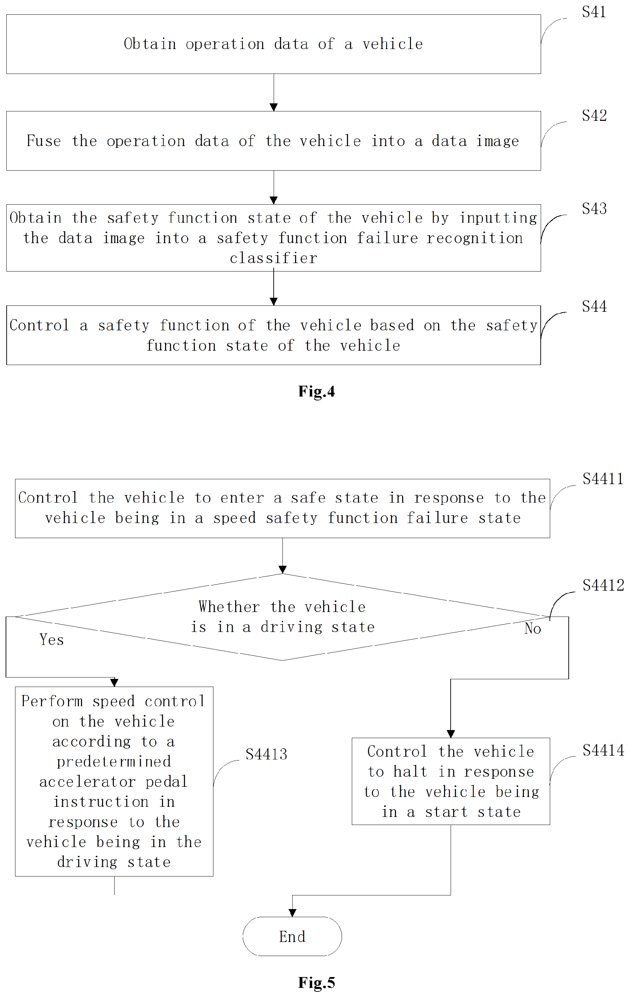

FIG. 4 is a flowchart of a vehicle safety function control method according to some embodiments of the present disclosure, which includes steps S41-S44.

In step S41, operation data of a vehicle is obtained.

In some embodiments, the vehicle includes a loader, and the operation data of the vehicle includes a accelerator pedal signal, a brake pedal signal, and a torque feedback signal.

In step S42, the operation data of the vehicle is fused into a data image.

In step S43, the safety function state of the vehicle is obtained by inputting the data image into a safety function failure recognition classifier, where the safety function state includes a safety function normal state or a safety function failure state. The safety function failure recognition classifier is obtained based on the training method of the above embodiment.

In some embodiments, the safety function failure state includes a speed safety function failure state or a deceleration-stop safety function failure state.

In step S44, a safety function of the vehicle is controlled based on the safety function state of the vehicle.

In the above embodiments, the trained safety function failure recognition classifier has the capability to identify safety function failures. With the trained safety function failure recognition classifier, a current safety function state of the vehicle can be more accurately identified, thereby improving the operational safety of the vehicle.

In some embodiments of the present disclosure, step S44 will be described with reference to FIG. 5 as an example. FIG. 5 is a flowchart of a vehicle safety function control method according to other embodiments of the present disclosure.

In step S4411, the vehicle is controlled to enter a safe state in response to the vehicle being in a speed safety function failure state.

For example, the accelerator pedal and torque feedback signals are monitored, the safety function failure recognition classifier will indicate that the loader is in a speed safety function failure state if unexpected torque output occurs. An instruction will then be sent immediately to control the vehicle and bring it to a safe state. For example, pressing a safe state button may put the vehicle in a safe state, ensuring the safe operation of the vehicle.

In step S4412, it is determined whether the vehicle is in a driving state. If so, step S4413 is executed. Otherwise, step S4414 is executed.

In step S4413, speed control on the vehicle is performed according to a predetermined accelerator pedal instruction in response to the vehicle being in the driving state.

For example, when the loader is in the driving state, it is forced to control its speed according to an expected instruction, such as slowing down gradually until it comes to a complete stop.

In step S4414, the vehicle is controlled to halt in response to the vehicle being in a start state.

For example, if the loader is starting rather than in motion, it is halted.

In the above embodiment, if the vehicle is identified as being in a speed safety function failure state, the speed safety function of the vehicle can be controlled in a timely manner. This improves the operational safety of the vehicle and establishes a roadmap for deploying vehicle functional safety technology, thereby enhancing vehicle safety.

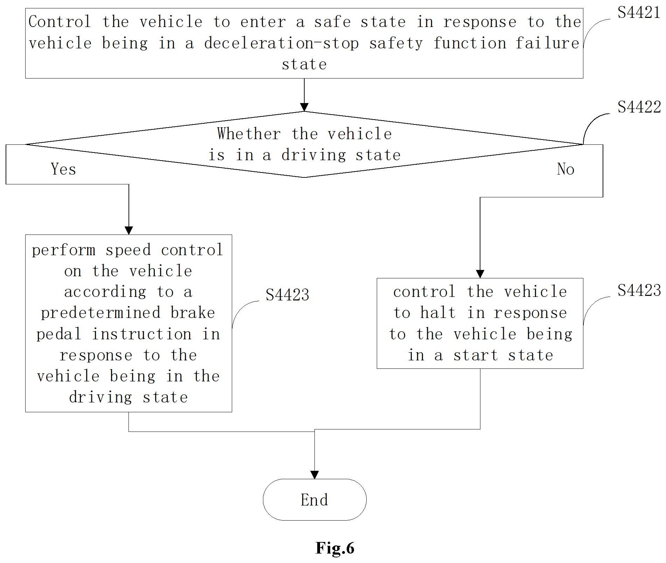

In some embodiments, step S44 will be described with reference to FIG. 6 as an example. FIG. 6 is a flowchart of a vehicle safety function control method according to still other embodiments of the present disclosure.

In step S4421, the vehicle is controlled to enter a safe state in response to the vehicle being in a deceleration-stop safety function failure state.

For example, brake pedal and torque feedback signals are monitored. If unexpected torque output occurs, the safety function failure recognition classifier will indicate that the loader is in a deceleration-stop safety function failure state. At that point, an instruction will be immediately sent to control the vehicle and bring it to a safe state. For example, pressing a safe state button may put the vehicle in a safe state, ensuring its safe operation.

In step S4422, it is determined whether the vehicle is in a driving state. If so, step S4423 is executed. Otherwise, step S4424 is executed.

In step S4423, speed control on the vehicle is performed according to a predetermined brake pedal instruction in response to the vehicle being in the driving state,.

For example, when the loader is in the driving state, it is forced to control its speed according to an expected instruction, such as slowing down gradually until it comes to a complete stop.

In step S4424, the vehicle is controlled to halt in response to the vehicle being in a start state.

For example, if the loader is starting rather than in motion, it is halted.

In the above embodiment, if the vehicle is identified as being in a deceleration-stop safety function failure state, the deceleration-stop safety function can be controlled in a timely manner. This improves the operational safety of the vehicle and establishes a roadmap for deploying vehicle functional safety technology, thereby enhancing vehicle safety.

In some embodiments, the driving state of the vehicle is controlled to remain unchanged in response to the vehicle being in a safety function normal state. For example, if the speed and deceleration/stop safety functions of the loader are normal, it remains in normal driving condition.

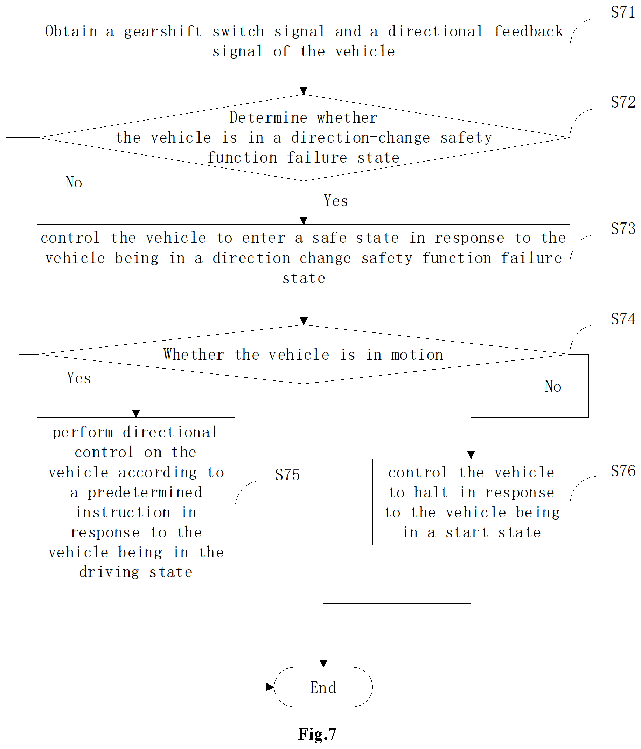

FIG. 7 is a flowchart of a vehicle safety function control method according to still other embodiments of the present disclosure, which includes steps S71-S76.

In step S71, a gearshift switch signal and a directional feedback signal of the vehicle are obtained.

In some embodiments, the gearshift switch signal and the directional feedback signal from a motor controller are monitored by a vehicle safety controller in real time.

In step S72, it is determined whether the vehicle is in a direction-change safety function failure based on the gearshift switch signal and directional feedback signal. If so, step S73 is executed. Otherwise, the vehicle remains in a normal driving state.

In some embodiments, the gearshift switch signal and the directional feedback signal from the motor controller are monitored. If an unexpected direction output occurs, it indicates that the loader has experienced an abnormal change in direction and needs to be controlled to enter a safe state.

In step S73, the vehicle is controlled to enter a safe state in response to the vehicle being in a direction-change safety function failure state.

For example, an instruction is immediately issued to control the loader to enter the safe state.

In step S74, it is determined whether the vehicle is in motion. If so, step S75 is executed; otherwise, step S76 is executed.

In step S75, directional control is performed on the vehicle according to a predetermined instruction in response to the vehicle being in a driving state.

For example, if the loader is in motion, it is forced to control its direction according to an expected instruction. For example, the loader is controlled to slow down gradually in a predetermined direction until it stops.

In step S76, the vehicle is controlled to halt in response to the vehicle being in a start state.

For example, if the loader is starting, it will be turned off.

In the above embodiment, in the case where the vehicle is in a direction-change safety function failure, the safety function of the vehicle can be controlled in a timely manner, which can improve the operational safety of the vehicle.

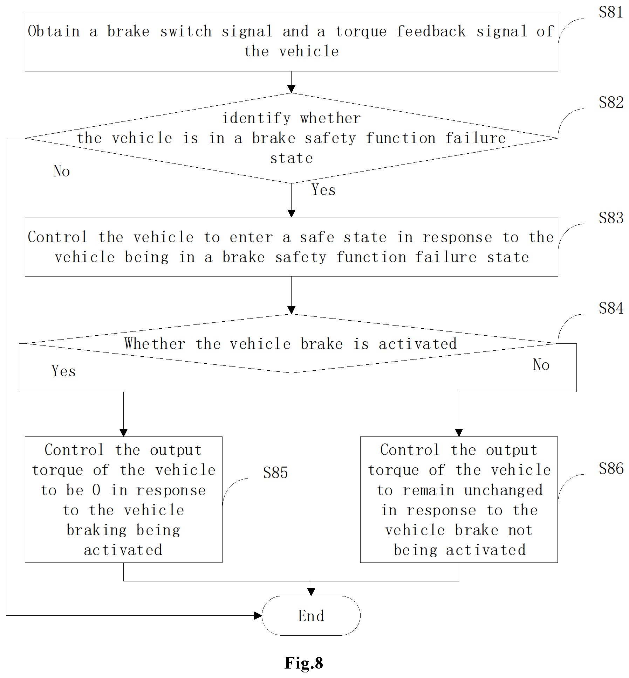

FIG. 8 is a flowchart of a vehicle safety function control method according to still other embodiments of the present disclosure, which includes steps S81-S86.

In step S81, a brake switch signal and a torque feedback signal of the vehicle are obtained.

In some embodiments, the brake switch signal is detected by a brake sensor, and the torque feedback signal is detected by a torque feedback sensor.

In step S82, it is identified whether the vehicle is in a brake safety function failure state based on the brake switch signal and torque feedback signal. If so, proceed to step S83. Otherwise, the vehicle remains in a normal driving state.

For example, if the loader does not engage the parking brake as anticipated, it indicates that loader's parking brake is abnormal. For example, if the brake switch is pressed and the torque feedback signal is 0, it indicates that the brake safety function is normal. If the torque feedback signal is not 0, it indicates that the brake safety function has failed.

In step S83, the vehicle is controlled to enter a safe state in response to the vehicle being in a brake safety function failure state.

For example, in the case of an abnormal parking brake issue of the loader, an instruction is immediately sent to control the loader to enter a safe state.

In step S84, it is determined whether the vehicle brake is activated. If so, step S85 is executed; otherwise, step S86 is executed.

In step S85, the output torque of the vehicle is controlled to be 0 in response to the vehicle braking being activated.

For example, when the brake of the loader is activated, a control instruction is issued to set the output torque of the loader to 0.

In step S86, the output torque of the vehicle is controlled to remain unchanged in response to the vehicle brake not being activated.

For example, if the brake of the loader is not activated, the loader maintains the current output torque.

In the above embodiment, in the case where the vehicle is in a brake safety function failure state, the safety function of the vehicle can be controlled in a timely manner, which can improve the operational safety of the vehicle.

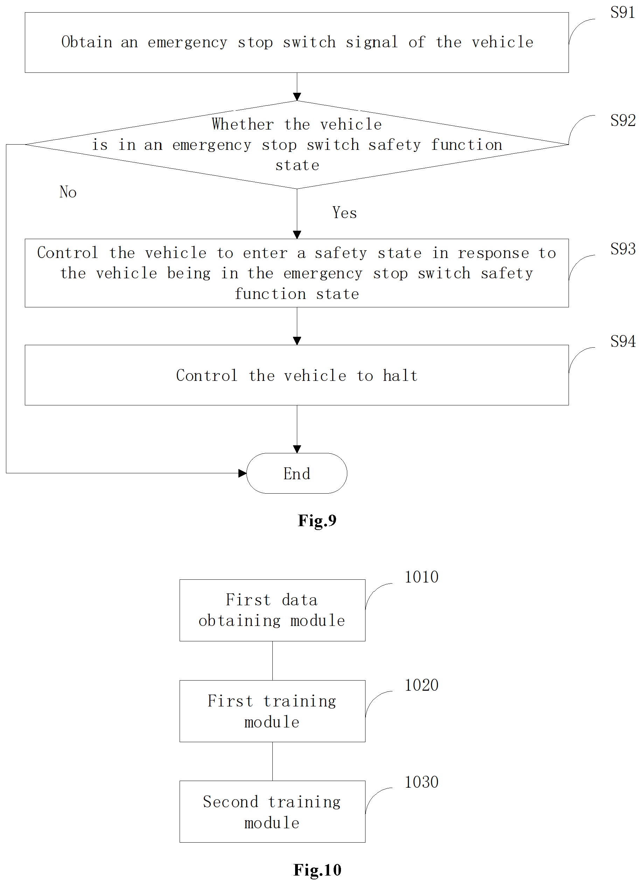

FIG. 9 is a flowchart of a vehicle safety function control method according to still other embodiments of the present disclosure, which includes steps S91-S94.

In step S91, an emergency stop switch signal of the vehicle is obtained.

In step S92, it is determined whether the vehicle is in an emergency stop switch safety function state based on the emergency stop switch signal. If so, step S93 is executed. Otherwise, the normal driving state is maintained.

For example, if an emergency stop switch is pressed, it indicates that the loader is in the emergency stop switch safety function state.

In step S93, the vehicle is controlled to enter a safety state in response to the vehicle being in the emergency stop switch safety function state.

In step S94, the vehicle is controlled to halt.

For example, an operation instruction is sent to control the loader to stop moving.

In the above embodiment, when the vehicle is in the emergency stop switch safety function state, the safety function of the vehicle can be controlled in a timely manner, which can improve the operational safety of the vehicle.

In some embodiments of the present disclosure, various safety functions are defined for an earth-moving machinery product, such as a loader, according to the ISO 19014 functional safety standard, including loader speed safety function, loader direction-change safety function, loader deceleration-stop safety function, loader parking brake safety function, and loader emergency stop safety function. An accelerator pedal signal, a brake pedal signal, a torque feedback signal, a direction feedback signal, a brake switch signal, and an emergency stop switch signal are obtained from the loader. The accelerator pedal signal, the brake pedal signal, and the torque feedback signal are fused into a time-frequency image, and a trained safety function failure recognition classifier is configured to identify whether the loader is in a speed safety function failure state, a deceleration-stop safety function failure state, or a normal state of speed and deceleration-stop safety functions. In addition, it is directly determined whether the loader is in a direction-change safety function failure state, a braking safety function failure state, or an emergency stop switch safety function state based on the torque feedback signal, the direction feedback signal, the brake switch signal, and the emergency stop switch signal, and then various safety functions of the loader are controlled. This control method can effectively reduce the probability of safety function failure in the loader, thereby improving its operational safety.

The steps shown in FIGS. 4-9 are executed by a vehicle safety function control apparatus, which may be, for example, a vehicle safety controller of the loader or a controller or a control unit module that is only responsible for the safety functions.

FIG. 10 is a schematic structure diagram of a training apparatus for training a safety function failure recognition classifier according to some embodiments of the present disclosure. This training apparatus includes: a first data obtaining module 1010, a first training module 1020, and a second training module 1030.

The first data obtaining module 1010 is configured to obtain signal sample images of a vehicle, where the signal sample images include images with normal safety function and images with failed safety function.

In some embodiments, the vehicle is a loader and the images with failed safety function include images with speed safety function failure and images with deceleration-stop safety function failure.

The first data obtaining module 1010 obtains data sample signals of the vehicle during normal operation, speed safety function failures, and deceleration-stop safety function failures respectively, where the data sample signals include accelerator pedal sample signals, brake pedal sample signals, and torque feedback sample signals; and fuses the data sample signals into signal sample images.

For example, the generation time of the data sample signals are obtained and the signal sample images are generated based on the data sample signals and the generation time. The signal sample images are, for example, time-domain images or frequency-domain images.

The first training module 1020 is configured to train a deep neural network model using the signal sample images, and perform data augmentation on the signal sample images using the trained deep neural network model to obtain training sample images.

In some embodiments, the deep neural network model includes a GAN model. The first training module 1020 inputs random noise into a generator of the GAN model to generate fake sample images; inputs the signal sample images and the fake sample images into a discriminator of the GAN model to obtain the authenticity of the samples; trains the discriminator using first loss function and trains the generator using second loss function, where the first loss function outputs a value that is negatively correlated with accuracy of the sample authenticity, and the second loss function outputs a value that is positively correlated with sample accuracy of the sample authenticity.

The second training module 1030 is configured to train a safety function failure recognition classifier using the training sample images, where the safety function failure recognition classifier is configured to identify a safety function state of the vehicle during operation, the safety function state including a safety function normal state or a safety function failure state.

In some embodiments, the safety function state includes a safety function normal state, a speed safety function failure state or a deceleration-stop safety function failure state.

In the above embodiment, a deep neural network model is constructed and trained to perform data augmentation on the signal sample images using the deep neural network model, resulting in a large number of training sample images. These training sample images are then configured to train the safety function failure recognition classifier to enable the safety function failure recognition classifier to identify a safety function state of the vehicle, thereby improving the speed and accuracy of recognition.

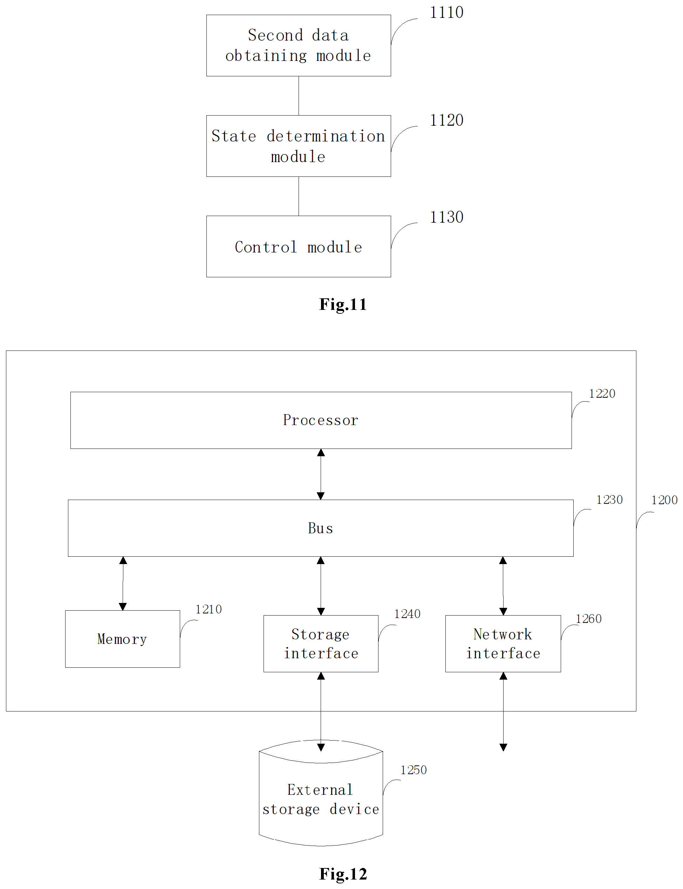

FIG. 11 is a schematic structure diagram of a vehicle safety function control apparatus according to some embodiments of the present disclosure, which includes a second data obtaining module 1110, a state determination module 1120, and a control module 1130.

The second data obtaining module 1110 is configured to obtain operation data of a vehicle and fuse the operation data into a signal image.

In some embodiments, the vehicle includes a loader, and the vehicle operation data includes an accelerator pedal signal, a brake pedal signal, and a torque feedback signal.

The state determination module 1120 is configured to obtain a safety function state of the vehicle by inputting the data image into the safety function failure recognition classifier, where the safety function state includes a safety function normal state or a safety function failure state, and the safety function failure recognition classifier is obtained based on the training method described above.

In some embodiments, the safety function failure state includes a speed safety function failure state or a deceleration-stop safety function failure state.

The control module 1130 is configured to control a safety function of the vehicle based on the safety function state of the vehicle.

In some embodiments, the vehicle is controlled to enter a safe state in response to the vehicle being in a speed safety function failure state; a speed control on the vehicle is performed according to a predetermined accelerator pedal instruction in response to the vehicle being in a driving state; and the vehicle is controlled to halt in response to the vehicle being in a start state.

In some embodiments, the vehicle is controlled to enter a safe state in response to the vehicle being in a deceleration-stop safety function failure state; a speed control on the vehicle is performed according to a predetermined brake pedal instruction in response to the vehicle being in the driving state; and the vehicle is controlled to halt in response to the vehicle being in a start state.

In some embodiments, the driving state of the vehicle is controlled to remain unchanged in response to the vehicle being in a safety function normal state.

In the above embodiments, the trained safety function failure recognition classifier has the capability to identify safety function failures. With the trained safety function failure recognition classifier, a current safety function state of the vehicle can be more accurately identified, thereby improving the operational safety of the vehicle.

In other embodiments of the present disclosure, the second data obtaining module 1110 is further configured to obtain a gearshift switch signal and a directional feedback signal of the vehicle. The state determination module 1120 is further configured to identify whether the vehicle is in a direction-change safety function failure state based on the gearshift switch signal and the directional feedback signal. The control module 1130 is further configured to control the vehicle to enter a safe state in response to the vehicle being in a direction-change safety function failure state and determine whether the vehicle is in a driving state; perform directional control on the vehicle according to a predetermined instruction in response to the vehicle being in the driving state; and control the vehicle to halt in response to the vehicle being in a start state.

In the above embodiment, in the case where the vehicle is in the direction-change safety function failure state, the safety functions of the vehicle can be controlled in a timely manner, which can improve the operational safety of the vehicle.

In some embodiments, the second data obtaining module 1110 is further configured to obtain a brake switch signal of the vehicle. The state determination module 1120 is further configured to identify whether the vehicle is in a brake safety function failure state based on the brake switch signal and the torque feedback signal. The control module 1130 is further configured to control the vehicle to enter a safe state in response to the vehicle being in the brake safety function failure state and determine whether vehicle braking is activated; control output torque of the vehicle to be zero in response to the vehicle braking being activated; and control the output torque of the vehicle to remain unchanged in response to the vehicle braking not being activated.

In the above embodiment, in the case where the vehicle is in the brake safety function failure state, the safety functions of the vehicle can be controlled in a timely manner, which can improve the operational safety of the vehicle.

In some embodiments, the second data obtaining module 1110 is further configured to obtain an emergency stop switch signal of the vehicle. The state determination module 1120 is further configured to identify whether the vehicle is in an emergency stop switch safety function state based on the emergency stop switch signal. The control module 1130 is further configured to control the vehicle to enter a safe state in response to the vehicle being in the emergency stop switch safety function state and control the vehicle to halt.

In the above embodiment, in a case where the vehicle is in the emergency stop switch safety function state, the safety functions of the vehicle can be controlled in a timely manner, which can improve the operational safety of the vehicle.

FIG. 12 is a schematic structural diagram of an electronic device according to some embodiments of the present disclosure. The electronic device 1200 includes a memory 1210 and a processor 1220, where the memory 1210 may be a magnetic disk, flash memory or any other non-volatile storage medium. The memory is configured to store instructions of a corresponding embodiment described above. The processor 1220 is coupled to the memory 1210 and may be implemented as one or more integrated circuits, such as a microprocessor or microcontroller. The processor 1220 is configured to execute the instructions stored in the memory.

In some embodiments, the processor 1220 is coupled to the memory 1210 via a bus 1230. The electronic device 1200 may be further connected to an external storage device 1250 through a storage interface 1240 to access external data, and may be further connected to a network or another computer system (not shown) through a network interface 1260, the details of which will not described herein.

In this embodiment, through storing data instructions in memory and processing the above instructions by a processor, the probability of safety function failure of the vehicle can be effectively reduced, thereby improving operational safety.

In other embodiments of the present disclosure, there is provided a vehicle, such as a loader, that includes an apparatus for training the safety function failure recognition classifier, the vehicle safety function control apparatus, or the electronic device as described in the above embodiments.

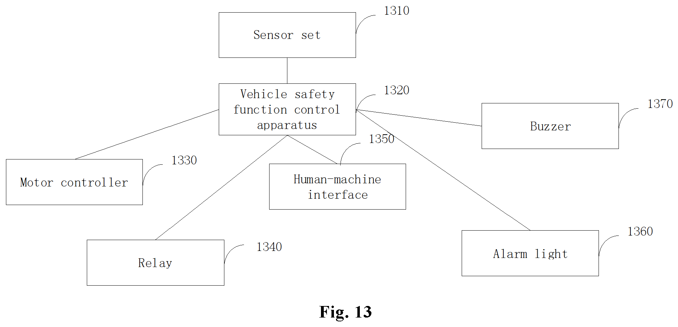

In some embodiments, as shown in FIG. 13, which is a schematic structure diagram of the vehicle according to some embodiments of the present disclosure, the vehicle includes a sensor set 1310, a vehicle safety function control apparatus 1320, a motor controller 1330, a relay 1340, a human-machine interface 1350, an alarm light 1360, and a buzzer 1370, etc.

The sensor set 1310 includes a variety of sensors for collecting various signals from the vehicle. The vehicle safety function control apparatus 1320 is, as the control center of the entire vehicle, responsible for receiving signals output from the set of sensors, and outputting control instructions to actuators upon calculation of control algorithms to achieve operation control and safety function control of the vehicle. The actuators include a motor controller 1330, a relay 1340, a human-machine interface 1350, an alarm light 1360, and a buzzer 1370, etc.

The motor controller 1330 actively controls a motor to operate according to the specified direction, speed, angle, or response time parameters. The relay 1340 is an "automatic switch" that controls high-current operation using low current, serving functions such as safety protection and circuit switching. For example, when the emergency stop switch is pressed, the relay is cut off from power and the loader stops moving. The human-machine interface 1350 displays the vehicle's status information and related sensor information. The alarm light 1360 generates an alarm signal in the event of vehicle safety function failures. The buzzer 1370 emits a sound to alert the operator/user in the event of vehicle safety function failures.

In other embodiments, there is provided a computer-readable storage medium stored thereon computer program instructions that, when executed by a processor, implement the steps of the method of the above embodiment. One skilled in the art should understand that, the embodiments of the present disclosure may be provided as a method, an apparatus, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (including but not limited to disk storage, CD-ROM, optical storage device, etc.) having computer-usable program code embodied therein.

An embodiment of the present disclosure further provides a computer program product including computer programs or instructions that, when executed by a processor, implement the training method or the vehicle safety function control method described above. The computer program product includes a computer program carried on a computer-readable medium, the computer program containing program code for performing the method illustrated in the flowcharts. In such an embodiment, the computer program may be downloaded and installed from the network through the communication device, or installed from a storage device, or from a ROM. When the computer program is executed by a CPU, the above functions defined in the methods provided by the embodiments of the present disclosure are performed.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

According to some embodiments of the present disclosure, there is further provided a computer program, including: instructions that, when executed by a processor, cause the processor to perform the training method or vehicle safety function control method described above.

Heretofore, the present disclosure has been described in detail. In order to avoid obscuring the concepts of the present disclosure, some details known in the art are not described. Based on the above description, those skilled in the art can understand how to implement the technical solutions disclosed herein.

The method and apparatus of the present disclosure may be implemented in many ways. For example, the method and apparatus of the present disclosure may be implemented by software, hardware, firmware, or any combination of software, hardware, and firmware. The above sequence of steps of the method is merely for the purpose of illustration, and the steps of the method of the present disclosure are not limited to the above-described specific order unless otherwise specified. In addition, in some embodiments, the present disclosure may also be implemented as programs recorded in a recording medium, which include machine-readable instructions for implementing the method according to the present disclosure. Thus, the present disclosure also covers a recording medium storing programs for executing the method according to the present disclosure.

Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified without departing from the scope and spirit of the present disclosure. The scope of the disclosure is defined by the following claims.

## Claims

1. A training method for training a safety function failure recognition classifier, comprising:
obtaining signal sample images of a vehicle, wherein the signal sample images comprise images with normal safety function and images with failed safety function;
training a deep neural network model using the signal sample images, and performing data augmentation on the signal sample images using the trained deep neural network model to obtain training sample images; and
training a safety function failure recognition classifier using the training sample images, wherein the safety function failure recognition classifier is configured to identify a safety function state of the vehicle during operation, the safety function state comprising a safety function normal state or a safety function failure state.

2. The training method according to claim 1, wherein the vehicle is a loader, and the images with failed safety function comprise images with speed safety function failure and images with deceleration-stop safety function failure, and wherein the safety function state comprises the safety function normal state, a speed safety function failure state, and a deceleration-stop safety function failure state.

3. The training method according to claim 2, wherein obtaining the signal sample images of the vehicle comprises:
obtaining data sample signals of the vehicle during normal operation, speed safety function failures, and deceleration-stop safety function failures respectively, wherein the data sample signals comprise accelerator pedal sample signals, brake pedal sample signals, and torque feedback sample signals; and
fusing the data sample signals into the signal sample images.

4. The training method according to claim 3, wherein obtaining the signal sample images of the vehicle further comprises:
obtaining generation time of the data sample signals, wherein converting the data sample signals into the signal sample images comprises:
generating the signal sample images based on the data sample signals and the generation time.

5. The training method according to any one of claims 1 to 4, wherein the deep neural network model comprises a generative adversarial network model, and training the deep neural network model using the signal sample images comprises:
generating fake sample images by inputting random noise into a generator of the generative adversarial network model;
obtaining the sample authenticity by inputting the signal sample images and the fake sample images into a discriminator of the generative adversarial network model; and
training the discriminator using a first loss function and training the generator using a second loss function, wherein the first loss function outputs a value that is negatively correlated with accuracy of the sample authenticity, and the second loss function outputs a value that is positively correlated with accuracy of the sample authenticity.

6. A vehicle safety function control method, comprising:
obtaining operation data of a vehicle;
fusing the operation data of the vehicle into a data image;
obtaining a safety function state of the vehicle by inputting the data image into a safety function failure recognition classifier, wherein the safety function state comprises a safety function normal state or a safety function failure state, and the safety function failure recognition classifier is obtained based on the training method according to any one of claims 1 to 5; and
controlling a safety function of the vehicle based on the safety function state of the vehicle.

7. The vehicle safety function control method according to claim 6, wherein the vehicle comprises a loader, and wherein the operation data of the vehicle comprises an accelerator pedal signal, a brake pedal signal, and a torque feedback signal; and the safety function failure state comprises a speed safety function failure state or a deceleration-stop safety function failure state.

8. The vehicle safety function control method according to claim 7, wherein controlling the safety function of the vehicle based on the safety function state of the vehicle comprises:
controlling the vehicle to enter a safety state in response to the vehicle being in a speed safety function failure state, and determining whether the vehicle is in a driving state;
performing speed control on the vehicle according to a predetermined accelerator pedal instruction in response to the vehicle being in the driving state; and
controlling the vehicle to halt in response to the vehicle being in a start state.

9. The vehicle safety function control method according to claim 7 or 8, wherein controlling the safety function of the vehicle based on the safety function state of the vehicle comprises:
controlling the vehicle to enter a safe state in response to the vehicle being in a deceleration-stop safety function failure state, and determining whether the vehicle is in a driving state;
performing speed control on the vehicle according to a predetermined brake pedal instruction in response to the vehicle being in the driving state; and
controlling the vehicle to halt in response to the vehicle being in a start state.

10. The vehicle safety function control method according to any one of claims 7 to 9, wherein controlling the safety function of the vehicle based on the safety function state of the vehicle comprises:
controlling driving state of the vehicle to remain unchanged in response to the vehicle being in a safety function normal state.

11. The vehicle safety function control method according to any one of claims 6 to 10, further comprising:
obtaining a gearshift switch signal and a directional feedback signal of the vehicle;
identifying whether the vehicle is in a direction-change safety function failure state based on the gearshift switch signal and the directional feedback signal;
controlling the vehicle to enter a safe state in response to the vehicle being in a direction-change safety function failure state and determining whether the vehicle is in a driving state;
performing directional control on the vehicle according to a predetermined instruction in response to the vehicle being in the driving state; and
controlling the vehicle to halt in response to the vehicle being in a start state.

12. The vehicle safety function control method according to any one of claims 6 to 11, further comprising:
obtaining a brake switch signal of the vehicle;
identifying whether the vehicle is in a brake safety function failure state based on the brake switch signal and a torque feedback signal;
controlling the vehicle to enter a safe state in response to the vehicle being in the brake safety function failure state and determining whether vehicle braking is activated;
controlling output torque of the vehicle to be zero in response to the vehicle braking being activated; and
controlling the output torque of the vehicle to remain unchanged in response to the vehicle braking not being activated.

13. The vehicle safety function control method according to any one of claims 6 to 12, further comprising:
obtaining an emergency stop switch signal of the vehicle;
identifying whether the vehicle is in an emergency stop switch safety function state based on the emergency stop switch signal; and
controlling the vehicle to enter a safe state in response to the vehicle being in the emergency stop switch safety function state and controlling the vehicle to halt.

14. A training apparatus for training a safety function failure recognition classifier, comprising:
a first data obtaining module configured to obtain signal sample images of a vehicle, wherein the signal sample images comprise images with normal safety function and images with failed safety function;
a first training module configured to train a deep neural network model using the signal sample images, and perform data augmentation on the signal sample images using the trained deep neural network model to obtain training sample images; and
a second training module configured to train a safety function failure recognition classifier using the training sample images, wherein the safety function failure recognition classifier is configured to identify a safety function state of the vehicle during operation, the safety function state comprising a safety function normal state or a safety function failure state.

15. A vehicle safety function control apparatus, comprising:
a second data obtaining module configured to obtain operation data of a vehicle and fuse the operation data of the vehicle into a signal image;
a state determination module configured to obtain a safety function state of the vehicle by inputting the data image into a safety function failure recognition classifier, wherein the safety function state comprises a safety function normal state or a safety function failure state, and the safety function failure recognition classifier is obtained based on the training method according to any one of claims 1 to 5; and
a control module configured to control safety functions of the vehicle based on the safety function state of the vehicle.

16. An electronic device, comprising:
a memory; and
a processor coupled to the memory, the processor configured to, based on instructions stored in the memory, carry out the training method according to any one of claims 1 to 5, or the vehicle safety function control method according to any one of claims 6 to 13.

17. A vehicle, comprising:
at least one of the apparatus for training a safety function failure recognition classifier according to claim 14, the vehicle safety function control apparatus according to claim 15, or the electronic device according to claim 16.

18. A computer-readable storage medium stored thereon computer program instructions that, when executed by a processor, implement the training method according to any one of claims 1 to 5 or the vehicle safety function control method according to any one of claims 6 to 13.

19. A computer program product comprising a computer program/instructions that, when executed by a processor, implement the training method according to any one of claims 1 to 5 or the vehicle safety function control method according to any one of claims 6 to 13.

20. A computer program, comprising:
instructions that, when executed by a processor, cause the processor to perform the training method according to any one of claims 1 to 5 or the vehicle safety function control method according to any one of claims 6 to 13.
